# FASCICULE DE BREVET EUROPEEN

(11) **EP 3 728 884 B1**
(45) Date de publication et mention de la délivrance du brevet: **12.07.2023**
(21) Numéro de dépôt: 18830815.9
(22) Date de dépôt: 20.12.2018
(51) Int. Cl.: F16D 1/068, F16D 21/06, F16D 25/0638

(54) **PORTE-DISQUE POUR EMBRAYAGE HUMIDE, MECANISME À EMBRAYAGE HUMIDE COMPORTANT UN TEL PORTE-DISQUE ET PROCEDE POUR FABRIQUER UN TEL PORTE-DISQUE**
SCHEIBENHALTER FÜR NASSKUPPLUNG, NASSKUPPLUNGS-MECHANISMUS, DER EINEN SOLCHEN SCHEIBENHALTER HAT, UND VERFAHREN ZUR HERSTELLUNG EINES SOLCHEN SCHEIBENHALTERS
WET CLUTCH DISC HOLDER, WET CLUTCH MECHANISM HAVING SUCH A DISK HOLDER, AND METHOD FOR MANUFACTURING SUCH DISC HOLDER

(30) Priorité: 22.12.2017 FR 1763098
(43) Date de publication de la demande: 28.10.2020
(73) Titulaire: VALEO EMBRAYAGES, 80009 Amiens (FR)
(72) Inventeur: DOLE, Arnaud, 80009 AMIENS (FR); ARHAB, Rabah, 80009 AMIENS (FR); THIBAUT, François, 80009 AMIENS (FR); CORNET, Vincent, 80009 AMIENS (FR)
(74) Mandataire: Valeo Powertrain Systems
(86) Numéro de dépôt international: PCT/EP2018/086169
(87) Numéro de publication internationale: WO 2019/122110

(56) Documents cités:
- EP-A1- 3 273 083
- WO-A1-96/30663
- WO-A1-2015/000482
- DE-A1-102012 013 873
- DE-A1-102013 224 122
- FR-A1- 2 732 427
- GB-A- 2 272 269

## Description

La présente invention concerne un mécanisme à double embrayage humide comportant ce porte-disque.

Un tel mécanisme à embrayage humide est destiné à constituer une partie d'un système de transmission de couple, notamment pour un véhicule automobile ou pour un véhicule dit industriel, ce dernier étant par exemple un poids lourd, un véhicule de transport en commun, ou un véhicule agricole.

La demande de brevet WO 2015/000482 A1 divulgue un mécanisme à double embrayage humide pour un véhicule automobile, comprenant des moyens d'entrée de couple destinés à être couplés à un vilebrequin, un premier porte-disque de sortie de couple connecté à un premier arbre de boite de vitesse, un deuxième porte-disque de sortie de couple connecté à un deuxième arbre de boite de vitesse, des paliers axiaux aménagés entre les moyens d'entrée de couple et les portes-disques de sortie de couple, un premier embrayage apte à coupler ou découpler les moyens d'entrée de couple et le premier arbre de boite de vitesse, un deuxième embrayage apte à coupler ou découpler les moyens d'entrée de couple et le deuxième arbre de boite de vitesse.

Les premier et deuxième embrayages respectivement de type multidisques, sont disposés radialement l'un au dessus de l'autre. Chacun des embrayages multidisques comportent des flasques liés en rotation à un porte-disque d'entrée formant le moyen d'entrée de couple et des disques de friction liés en rotation à des porte-disques de sortie. Le premier embrayage comporte également un piston mobile axialement qui est commandé en déplacement au moyen d'une chambre de commande à laquelle est associée une chambre d'équilibrage délimitée au moins par un couvercle d'équilibrage.

Chacun des porte-disques de sortie de couple comprend dans le cas présent un moyeu cylindrique forgé et un support de disques en tôle comprenant une extension axiale agencée pour recevoir les disques de friction respectivement du premier ou du deuxième embrayage. Les moyens d'entrée de couple sont, dans le cas présent, un porte-disque comprenant un moyeu cylindrique forgé et un support de disques en tôle comprenant une extension axiale agencée pour recevoir les flasques respectivement du premier ou du deuxième embrayage.

Ces différents portes-disques sont réalisés par assemblage d'un moyeu et d'un support de disques fixés ensemble par plusieurs opérations, telles que : la réalisation d'une portée cylindrique interne sur le support de disques, la réalisation d'une portée cylindrique externe sur le moyeu, l'emmanchement de la portée cylindrique interne du support de disques sur la portée cylindrique externe du moyeu, la soudure avec apport de matière au niveau de l'emmanchement du moyeu et du support de disques. Les opérations de montage d'un tel porte-disque sont relativement complexes.

Le positionnement axial du support de disques sur le moyeu génère notamment un encombrement axial et radial important.

En particulier, du fait des positionnements des paliers axiaux entre les porte-disques, les cordons de soudure sont décalés radialement au dessus des paliers axiaux et éloignés du moyeu forgé.

Le moyeu présente un diamètre extérieur de grande dimension, ce qui implique un poids plus élevé, un coût de matière important ainsi qu'une opération supplémentaire d'usinage.

Le support de disques présente un alésage intérieur de grande dimension, ce qui génère une perte de matière importante au niveau de l'alésage central.

L'invention a notamment pour but d'apporter une solution simple, efficace et économique à ce problème.

Le but de la présente invention est notamment de proposer un porte-disque pour embrayage humide permettant de résoudre au moins une partie de certains inconvénients de l'art antérieur.

A cet effet, l'invention a pour objet un mécanisme à double embrayage humide avant les caractéristiques de la revendication 1.

Selon un de ces aspects, l'invention propose un porte-disque pour embrayage humide, comprenant :
- un moyeu de forme cylindrique d'axe de rotation O
- un support de disques de forme de révolution autour de l'axe O, le support de disques étant en appui axial sur le moyeu, le moyeu et le support de disques étant assemblés au moyen de soudage par friction.

Ce porte-disque, selon l'invention, présente l'avantage, grâce à la soudure par friction, de remplacer des moyeux forgés par des moyeux présentant des formes simplifiées, de façon à réduire sensiblement les coûts de fabrication. La forme du support de disques est également simplifiée.

Avantageusement le support de disques comprend un alésage dont la périphérie interne définit un premier diamètre D1 selon l'axe O, et le moyeu comprend une périphérie externe définissant un deuxième diamètre D2 selon l'axe O, le diamètre D1 étant inférieur au diamètre D2. Le support de disques et le moyeu, selon l'invention, présentent l'avantage, de réduire le nombre d'opérations, par exemple en supprimant l'emmanchement, et de simplifier la conception des pièces, par exemple en limitant la perte de matière.

Par périphérie interne on entend un endroit de la pièce situé proche de l'axe de rotation du dispositif d'embrayage.

Par périphérie externe on entend un autre endroit de la pièce situé éloigné de ce même axe.

Le moyeu comprend une première surface de friction et le support de disques comprend une deuxième surface de friction, la soudure par friction étant localisée entre la première et la deuxième surfaces de friction.

La première surface de friction peut être définie entre la périphérie interne et la périphérie externe du moyeu.

La deuxième surface de friction peut être définie entre la périphérie interne et la périphérie externe du support de disques.

Ces surfaces de friction, selon l'invention, présentent l'avantage, grâce à la soudure par friction, de réduire les défauts d'assemblage par soudure, par exemple les problèmes d'aboutement entre pièces. Les défauts de circularité sont également réduits. La tenue mécanique est améliorée en raison de l'existence d'une plus grande surface de contact entre le moyeu et le support de disques.

Avantageusement la première surface de friction est définie par le diamètre D2 et un diamètre intérieur D3, de façon à simplifier un tel porte-disque et réduire sensiblement ses coûts de fabrication.

Avantageusement le diamètre D3 est inférieur au diamètre D1.

En variante, le diamètre D3 peut être supérieur ou égal au diamètre D1.
- La première surface de friction peut être discontinue.
- La deuxième surface de friction peut être discontinue.
- La soudure par friction entre le moyeu et le support de disques peut être circonférentiellement continue, de façon à réaliser simplement l'opération de soudage, autorisant par la même occasion l'emploi de pièces embouties et/ou découpées presse.
- La soudure par friction entre le moyeu et le support de disques comprend deux bourrelets de soudage concentriques.

Avantageusement un premier bourrelet de soudage est situé sur la périphérie interne du support de disques et un deuxième bourrelet de soudage est situé sur la périphérie externe du moyeu.

Ces deux bourrelets de soudage, selon l'invention, présentent l'avantage d'une bonne reproductibilité, grâce à la soudure par friction, sans apport de matière supplémentaire lors de l'opération.

Un bourrelet de soudage est formée d'une quantité de matière plastique poussée vers l'extérieur des surfaces de friction, durant les phases d'échauffement et de soudage des deux pièces mises bout à bout sous une force de pression axiale spécifique, de façon à simplifier l'automatisation rapide de l'assemblage.

Le support de disques peut comporter une cannelure extérieure située sur la périphérie externe dudit support de disques, ladite cannelure étant agencée pour recevoir un ensemble multidisque de l'embrayage humide.

Le moyeu peut comporter une cannelure intérieure située sur la périphérie interne du moyeu, ladite cannelure intérieure étant agencée pour être connectée à un arbre de boite de vitesse.

En variante, le moyeu peut comporter une cannelure extérieure, ladite cannelure extérieure étant agencée pour être connectée à un arbre menant.

Dans un mode de mise en oeuvre de l'invention, le moyeu peut comprendre une portion cylindrique et une collerette s'étendant radialement vers l'extérieur depuis la portion cylindrique. Ce mode de réalisation présente l'avantage de décaler vers l'extérieur les cordons de soudure de l'emmanchement, sans augmenter la largeur des pièces.

Avantageusement la première surface de friction peut être formée sur la collerette, la première surface de friction étant définie par le diamètre D2 et le diamètre intérieur D3.

Le support de disques peut comprendre une extension axiale sur laquelle est formée la cannelure extérieure du support de disques et une extension radiale, la deuxième surface de friction étant formée sur l'extension radiale.

La première surface de friction peut être définie par le diamètre extérieure D2 de la collerette.

Le moyeu peut être réalisé par forgeage.

Le moyeu peut être réalisé par usinage.

Dans un autre mode de mise en oeuvre de l'invention, le moyeu peut être réalisé dans une tôle, par exemple une tôle d'acier.

La collerette peut être réalisée par pliage et/ou emboutissage de la tôle, de façon à réduire sensiblement le nombre de pièces.

Le moyeu en tôle peut comprendre au moins un raidisseur disposé entre la portion cylindrique et la collerette, de façon à faciliter l'opération de soudage et assurer le maintien en tenue du moyeu.

Avantageusement le moyeu en tôle peut comprendre une série de raidisseurs répartis angulairement autours de l'axe O. De cette manière, il est possible que la collerette comporte un surface de friction discontinue, consécutif à l'emboutissage du raidisseur.

Le moyeu en tôle peut comporter une surface annulaire agencée pour venir en appui sur un palier axial, par exemple une rondelle de butée, par exemple un palier à aiguille. De cette manière, on simplifie sensiblement la conception des pièces et les coûts de fabrication d'un tel porte-disque.

Selon ce mode de réalisation de l'invention, le moyeu en tôle et le support de disque en tôle sont réalisés simplement, sans surcout de fabrication.

Selon l'invention, un palier axial peut être interposé axialement entre le porte-disque de sortie du premier embrayage E1 et le porte-disque de sortie du deuxième embrayage E2.

Le palier axial est disposé radialement au moins en partie entre les diamètres D1 et D2 de l'un des porte-disques de sortie.

L'invention sera mieux comprise à la lecture de la description qui va suivre, donnée uniquement à titre d'exemple et faite en se référant aux dessins annexés dans lesquels :
- la figure 1 est une vue en coupe axiale d'un mécanisme à double embrayage humide comprenant un porte-disque selon un premier mode de mise en oeuvre de l'invention ;
- la figure 2 est une vue en coupe axiale du porte-disque seul selon le premier mode de mise en oeuvre de l'invention de la figure 1 ;
- la figure 3 est une vue en coupe axiale partielle du porte-disque seul selon un deuxième mode de mise en oeuvre de l'invention ;
- la figure 4 est une vue en coupe axiale du porte-disque seul selon un troisième mode de mise en oeuvre de l'invention ;
- les figures 5a, 5b et 5c décrivent un procédé de fabrication d'un porte-disque selon l'invention.

Dans la suite de la description et des revendications, on utilisera à titre non limitatif et afin d'en faciliter la compréhension, les termes « avant » ou « arrière » selon la direction par rapport à une orientation axiale déterminée par l'axe O principal de rotation de la transmission du véhicule automobile et les termes « intérieur / interne » ou « extérieur / externe » par rapport à l'axe O et suivant une orientation radiale, orthogonale à ladite orientation axiale.

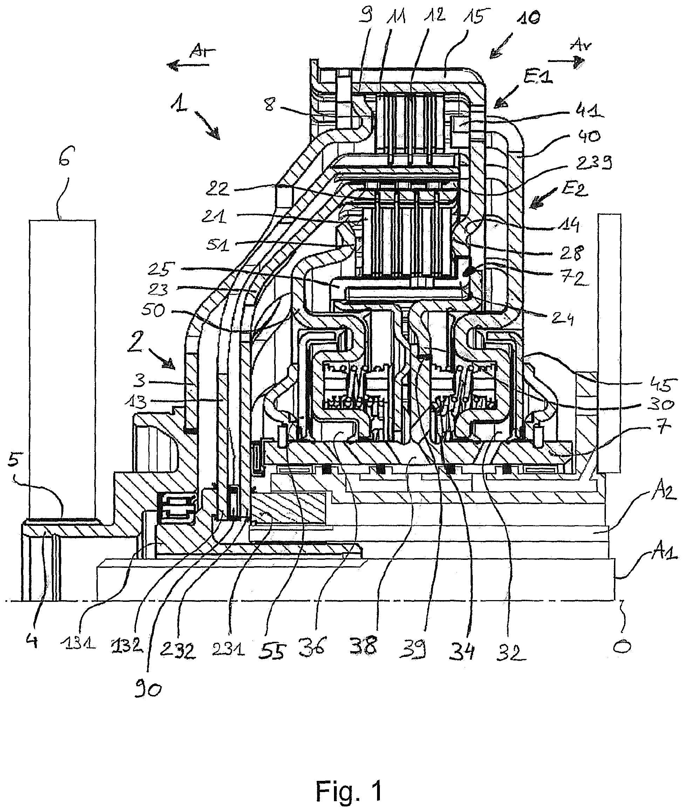

On a représenté sur les figures 1 à 2 un premier mode de mise en oeuvre d'un porte-disque pour mécanisme à double embrayage humide 1. Le mécanisme à double embrayage humide 1 présente un axe O principal de rotation.

Le mécanisme à double embrayage humide 1 pour système de transmission de couple comporte autour de l'axe O au moins un élément d'entrée 2 qui est lié en rotation à un arbre menant (non représenté). L'élément d'entrée 2 est situé à l'arrière du mécanisme à double embrayage humide 1.

Dans le premier mode de mise en oeuvre, l'élément d'entrée 2 présentant globalement une forme en « L » comporte une partie d'orientation radiale formée par un voile 3 d'entrée et une partie d'orientation axiale formée par un moyeu 4. Le voile 3 d'entrée et le moyeu 4 d'entrée sont solidaires, de préférence fixées ensemble par soudage avec apport de matière.

Le moyeu 4 est agencé radialement à l'intérieur par rapport au voile 3 d'entrée.

Le moyeu 4 d'entrée est par exemple lié en rotation par l'intermédiaire des cannelures 5 à la sortie d'un dispositif d'amortissement ou amortisseur 6 (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

Le voile 3 d'entrée comporte, à son extrémité radiale externe d'orientation axiale, des dents 9 qui s'étendent radialement vers l'extérieur et qui s'appuient sur une couronne assemblée 10.

Le mécanisme à double embrayage humide 1 est commandé pour accoupler sélectivement ledit arbre menant à un premier arbre A1 mené et à un deuxième arbre A2 mené.

De préférence, le premier arbre A1 mené et le deuxième arbre A2 mené sont coaxiaux. Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Le mécanisme à double embrayage humide 1 comporte un premier embrayage E1 et un deuxième embrayage E2, qui sont respectivement de type multidisques.

L'ensemble multidisque du premier embrayage E1 comporte des flasques 11 liés en rotation à la couronne assemblée 10 et des disques 12 de friction liés en rotation à un porte-disque de sortie 13. Les disques 12 de friction sont, unitairement, axialement interposés entre deux flasques 11 successifs.

Le porte-disque de sortie 13 du premier embrayage E1 est lié en rotation par engrènement avec les disques 12 de friction et par une liaison cannelée avec ledit premier arbre A1 mené.

Le porte-disque de sortie 13 comprend un moyeu 131 de forme cylindrique d'axe de rotation O et un support de disques 132 de forme de révolution autour de l'axe O, le support de disques 132 étant en appui axial sur le moyeu 131.

Le moyeu 131 et le support de disques 132 sont assemblés au moyen de soudage par friction.

Le porte-disque de sortie 13 présente globalement une forme en « L » dont l'extrémité radiale intérieure est solidarisée au moyeu 131 de sortie cannelé.

L'ensemble multidisque du deuxième embrayage E2 comporte des flasques 21 liés en rotation à la couronne assemblée 10 et des disques 22 de friction liés en rotation à un porte-disque de sortie 23.

Le porte-disque de sortie 23 du deuxième embrayage E2 est lié en rotation par engrènement avec les disques 22 de friction et par une liaison cannelée avec ledit deuxième arbre A2 mené.

Le porte-disque de sortie 23 comprend un moyeu 231 de forme cylindrique d'axe de rotation O et un support de disques 232 de forme de révolution autour de l'axe O, le support de disques 232 étant en appui axial sur le moyeu 231.

Le support de disques 232 comprend une extension axiale sur laquelle est formée une cannelure extérieure 239 du support de disques 232. Cette cannelure 239 est agencée pour recevoir les disques 22 de friction de l'ensemble multidisque du deuxième embrayage humide.

Le support de disques 232 comprend également une extension radiale, sur laquelle est formée une deuxième surface 236 de friction.

Le moyeu 231 et le support de disques 232 sont assemblés au moyen de soudage par friction.

Le porte-disque de sortie 23 présente globalement une forme en « L » dont l'extrémité radiale intérieure est solidarisée au moyeu 231 de sortie cannelé. Le moyeu 231 est réalisé par forgeage.

Comme illustré sur la figure 1, un palier axial est interposé axialement entre les porte-disques de sortie 13 et 23.

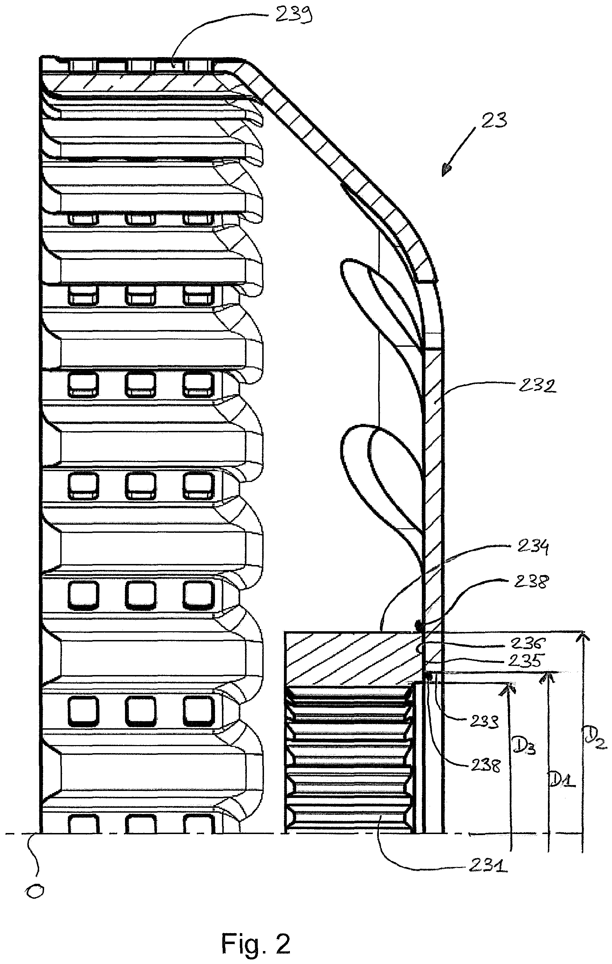

Dans le premier mode de mise en oeuvre illustré sur les figures 1 et 2, le support de disques 232 comprend un alésage 233 dont la périphérie interne définit un premier diamètre D1 selon l'axe O.

Le moyeu 231 comprend une périphérie externe 234 définissant un deuxième diamètre D2 selon l'axe O. Dans ce mode de mise en oeuvre, le diamètre D1 est inférieur au diamètre D2.

Le moyeu 231 comprend une première surface 235 de friction définie par le diamètre D2 et un diamètre intérieur D3.

La soudure par friction est localisée entre la première 235 et la deuxième 236 surfaces de friction. Avantageusement, la première surface 235 de friction est parallèle à la deuxième surface 236 de friction.

Dans le premier mode de mise en oeuvre illustré sur la figure 2, le diamètre D3 est inférieur au diamètre D1. Alternativement, le diamètre D3 peut être supérieur ou égal au diamètre D1. La géométrie simplifiée des surfaces de friction autorise des défauts de circularité au niveau des diamètres D1, D2 et D3.

Dans ce mode de mise en oeuvre, la première surface 235 et la deuxième surface 236 de friction sont continues.

La soudure par friction entre le moyeu 231 et le support de disques 232 comprend deux bourrelets 238 de soudage concentriques.

Avantageusement, un premier bourrelet 238 de soudage est situé sur la périphérie interne du support de disques 232, et un deuxième bourrelet de soudage 238 est situé sur la périphérie externe du moyeu 231.

Comme illustré sur la figure 1, un palier axial 90 est interposé axialement entre les porte-disques de sortie 13 et 23. Le palier axial 90 de type palier à aiguille est disposé radialement en partie entre les diamètres D1 et D2 du porte-disque 23. Le palier axial 90 est également disposé radialement en partie entre les diamètres D1 et D2 du porte-disque 13.

La couronne assemblée 10 comporte, en outre, un moyeu cylindrique 7 d'axe de rotation O, une couronne extérieure 14 du premier embrayage E1 et un couronne intérieure 24 du deuxième embrayage E2.

La couronne extérieure 14 est reliée fixement à la couronne intérieure 24 et au moyeu cylindrique 7 par l'intermédiaire d'un couvercle d'équilibrage 30 du premier embrayage E1 du mécanisme à double embrayage humide 1. Le couvercle d'équilibrage 30 est une pièce distincte du moyeu cylindrique 7. Le moyeu cylindrique 7, soudé au couvercle d'équilibrage 30, est commun au premier et au deuxième embrayage E1 et E2.

Le couvercle d'équilibrage 30 présente une forme générale de révolution autour de l'axe O et comprend une ouverture centrale 39 pour permettre son montage autour du moyeu cylindrique 7, l'ouverture centrale 39 étant formée sur une extrémité radiale intérieure.

La couronne extérieure 14 du premier embrayage E1, comporte une extension axiale 15 agencée pour recevoir l'ensemble multidisque du premier embrayage E1.

La couronne intérieure 24 du deuxième embrayage E2 comporte une extension axiale 25 agencée pour recevoir l'ensemble multidisque du deuxième embrayage E2.

Les couronnes intérieure 24 et extérieure 14 sont solidaires en rotation et fixées ensemble par soudage au couvercle d'équilibrage 30 et notamment soudés ensemble par un cordon de soudure avec apport de matière 72.

Comme illustré sur la figure 1, le premier embrayage E1 est disposé radialement au dessus du deuxième embrayage E2.

Dans une variante non représentée, les premier et deuxième embrayages E1, E2 peuvent être disposés axialement l'un à côté de l'autre.

De préférence, le premier embrayage E1 et le deuxième embrayage E2 sont à l'état ouvert, encore dit « normalement ouvert », et sont actionnés sélectivement en fonctionnement par un dispositif de commande (non représenté) pour passer de l'état ouvert à l'état fermé.

Le mécanisme à double embrayage humide 1 est commandé hydrauliquement par l'intermédiaire d'un fluide sous pression, généralement de l'huile.

Le premier embrayage E1 de type multidisque comporte un piston 40 qui est mobile axialement, ici de l'avant vers l'arrière, entre une position débrayée et une position embrayée qui correspondent respectivement aux états ouvert et fermé du premier embrayage E1.

Avantageusement, le piston 40 comporte à son extrémité radiale externe des appuis 41 qui s'étendent axialement vers l'arrière. Les appuis 41 viennent en appui sur le flasque 12 d'extrémité de l'ensemble multidisque du premier embrayage E1.

La chambre 32 de commande du piston 40 du premier embrayage E1 est associée à une chambre 34 d'équilibrage délimitée par une partie du moyeu cylindrique 7 et une partie du couvercle d'équilibrage 30.

Le piston 40 du premier embrayage E1 s'étend radialement et il est disposé axialement entre la chambre 32 de commande, située axialement à l'avant, et la chambre 34 d'équilibrage, située axialement à l'arrière. Le piston 40 est concentrique par rapport à la couronne assemblée 10.

Tel que représenté sur la figure 1, le piston 40 est commandé en déplacement au moyen d'une chambre 32 de commande délimitée axialement par une face avant d'une partie radiale interne du piston 40 et par une face radiale arrière d'une pièce de fermeture 45.

Le piston 40 est commandé pour venir serrer axialement, en position embrayée, ledit ensemble multidisque du premier embrayage E1 contre des moyens 8 de réaction formés directement dans le voile 3 d'entrée.

Le premier embrayage E1 comporte des moyens élastiques de rappel pour rappeler automatiquement le piston 40 en position débrayée, correspondant à un état ouvert de l'embrayage. Dans cette position, Le piston 40 libère axialement l'ensemble multidisque qui ne transmet alors plus de couple en direction du premier arbre A1 mené.

Le deuxième embrayage E2 du mécanisme à double embrayage humide 1 est de conception similaire à celle du premier embrayage E1, le deuxième embrayage E2 étant de type multidisque.

Le deuxième embrayage E2 comporte un piston 50 qui est mobile axialement, ici de l'arrière vers l'avant, entre une position débrayée et une position embrayée correspondant respectivement aux états ouvert et fermé du deuxième embrayage E2.

Le piston 40 du premier embrayage E1 et le piston 50 du deuxième embrayage E2 dudit mécanisme à double embrayage humide 1 se déplacent axialement en sens opposé pour passer par exemple de la position débrayée à la position embrayée.

Avantageusement, le piston 50 comporte, à son extrémité radiale externe des appuis 51 qui s'étendent axialement vers l'avant.

Les appuis 51 viennent en appui sur le flasque 21 d'extrémité de l'ensemble multidisque du deuxième embrayage E2. Dans l'exemple représenté sur la figure 1, les appuis 51 forment une couronne continue.

Tel que représenté sur la figure 1, le piston 50 est commandé en déplacement au moyen d'une chambre 36 de commande délimitée axialement par une face arrière d'une partie radiale interne du piston 50 et par une face radiale avant d'une pièce de fermeture 55.

La chambre 36 de commande du piston 50 du premier embrayage E2 est associée à une chambre 38 d'équilibrage délimitée au moins par un couvercle d'équilibrage.

Le piston 50 est concentrique à la couronne assemblée 10.

Le piston 50 est commandé pour venir serrer axialement, en position embrayée, ledit ensemble multidisque du deuxième embrayage E2 contre des moyens de réaction 28. Les moyens de réaction 28 sont formés directement sur la périphérie interne de la couronne extérieure 14 du premier embrayage E1.

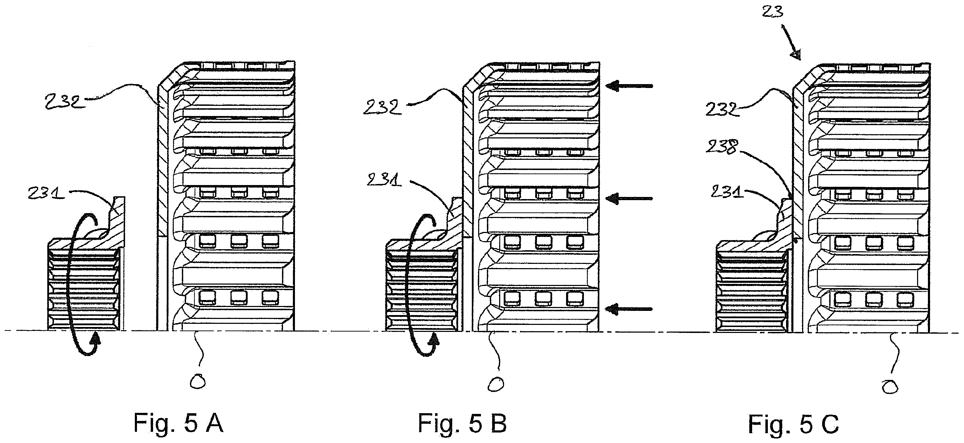

On va maintenant décrire la fabrication du porte-disque 23 suivant le premier mode de mise en oeuvre de l'invention, comme illustré également sur les figures 5a, 5b, 5c. La fabrication comporte, entre autre, les étapes suivantes :
Selon une première étape (représentée en figure 5a), le moyeu 231 est inséré dans un outillage mobile en rotation.

Le support de disques 232 est inséré dans un outillage fixe en rotation.

Selon une deuxième étape (représentée en figure 5b), le moyeu 231 est mis en appui et maintenu sous pression axiale sur le support de disques 232. Par exemple, la pression axiale est exercée par un effort de 500 Newton. Avantageusement, l'étape de mise en appui et de maintien sous pression axiale se fait sous une charge comprise entre 100 Newton et 1000 Newton. Le maintien sous charge a pour effet d'augmenter la température au niveau de la zone de recouvrement des surfaces de friction, facilitant ainsi l'opération de soudage.

Selon une troisième étape, on relâche la pression d'appui et on laisse refroidir la soudure par friction. Le refroidissement d'une soudure par friction peut être effectué par pulvérisation d'une source réfrigérante, par exemple par soufflage d'air froid ou ambiant, ou par immersion dans un liquide réfrigérant, par exemple par trempage dans l'huile, l'eau ou l'azote liquide, pendant un certain temps et jusqu'à ce que le matériau se solidifie et que la soudure reste intègre.

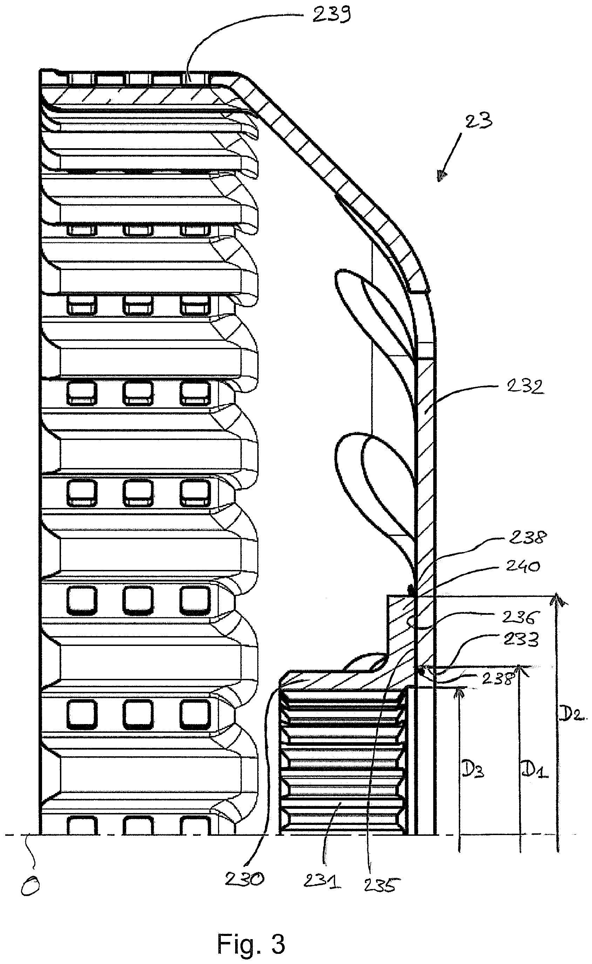

Un deuxième mode de mise en oeuvre du moyeu 231 selon l'invention est illustré sur la figure 3. Le moyeu 231 et le support de disques 232 sont assemblés au moyen de soudage par friction.

Le support de disques 232 comprend, de manière similaire au premier mode de réalisation illustré à la figure 1, une extension radiale sur laquelle est formée une deuxième surface 236 de friction.

Le deuxième mode mode de mise en oeuvre diffère du premier mode de réalisation de la figure 2 en ce que le moyeu 231 comprend une portion cylindrique 230 et une collerette 240 s'étendant radialement vers l'extérieur depuis la portion cylindrique 230.

Le support de disques 232 comprend un alésage 233 dont la périphérie interne définit un premier diamètre D1 selon l'axe O.

Le diamètre extérieur de ladite collerette 240 définit un deuxième diamètre D2 selon l'axe O. Dans ce mode de réalisation, le diamètre D1 est inférieur au diamètre D2.

Le moyeu 231 comprend également une première surface de friction 235 formée sur la collerette 240.

Avantageusement, la première surface 235 de friction est définie par le diamètre extérieure D2 de la collerette 240.

La soudure par friction est localisée entre la première 235 et la deuxième 236 surfaces de friction.

Dans ce mode de mode de mise en oeuvre, le moyeu est réalisé par forgeage. La première surface 235 et la deuxième surface 236 de friction sont continues.

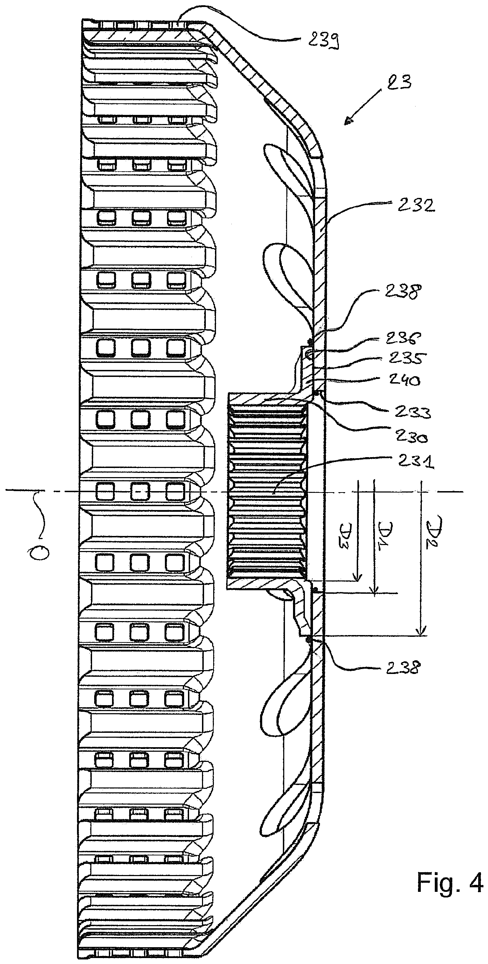

Un troisième mode de mise en oeuvre du moyeu 231 selon l'invention est illustré sur la figure 4. Le troisième mode de réalisation diffère du deuxième mode de réalisation en ce que le moyeu 231 est réalisé en tôle. Le moyeu 231 est réalisé par emboutissage d'une tôle d'acier. La collerette 240 du moyeu 231 est réalisée par pliage de la tôle.

Le moyeu 231 comprend une première surface de friction 235 formée sur la collerette 240.

Le moyeu 231 réalisé en tôle comprend des raidisseurs disposés entre la portion cylindrique 230 et la collerette 240. Les raidisseurs sont également obtenus lors de l'opération d'emboutissage. Comme les raidisseurs sont répartis angulairement autour de l'axe O, la collerette 240 du moyeu 231 comporte des portions de surfaces discontinues. La première surface 235 de friction est discontinue.

Le support de disques 232 comprend une extension radiale, sur laquelle est formée une deuxième surface 236 de friction. La deuxième surface 236 de friction peut être discontinue dans le cas ou des éléments raidisseurs seraient formés dans cette zone.

Dans une variante non représentée, le moyeu en tôle peut comporter une surface annulaire agencée pour venir en appui sur un palier axial, par exemple une rondelle de butée ou un palier à aiguille.

## Revendications

1. Mécanisme à double embrayage humide comprenant un premier embrayage (E1) et un deuxième embrayage (E2) respectivement de type multidisques, commandés pour accoupler sélectivement un arbre menant à un premier arbre mené et à un deuxième arbre mené, par exemple un premier et un deuxième arbres de boite de vitesses, lesdits premier et deuxième embrayages (E1, E2) comprennent, chacun d'eux, un porte-disque (13, 23) de sortie,
chacun des porte-disques comprenant :
- un moyeu (131, 231) de forme cylindrique d'axe de rotation O,
- un support de disques (132, 232) de forme de révolution autour de l'axe O, le support de disques (132, 232) étant en appui axial sur le moyeu (131, 231),
le moyeu (131, 231) et le support de disques (132, 232) étant assemblés au moyen de soudage par friction, dans lequel le support de disques (132, 232) comprend un alésage (233) dont la périphérie interne définit un premier diamètre D1 selon l'axe O, et le moyeu (131, 231) comprend une périphérie externe définissant un deuxième diamètre D2 selon l'axe O, le diamètre D1 étant inférieur au diamètre D2,
le mécanisme à double embrayage humide étant **caractérisé en ce qu'**il comprend également un palier axial (90) interposé axialement entre le porte-disque (13) de sortie du premier embrayage (E1) et le porte-disque (23) de sortie du deuxième embrayage (E2), le palier axial (90) étant disposé radialement au moins en partie entre les diamètres D1 et D2 de l'un des porte-disques de sortie.

2. Mécanisme à double embrayage humide selon la revendication précédente, dans lequel le moyeu (131, 231) comprend une première surface (235) de friction et le support de disques (132, 232) comprend une deuxième surface (236) de friction, la soudure par friction étant localisée entre la première (235) et la deuxième (236) surfaces de friction.

3. Mécanisme à double embrayage humide selon la revendication précédente, dans lequel la première surface (235) de friction est parallèle à la deuxième surface (236) de friction.

4. Mécanisme à double embrayage humide selon l'une quelconque des revendications précédentes, dans lequel le moyeu (131, 231) comprend une portion cylindrique (230) et une collerette (240) s'étendant radialement vers l'extérieur depuis la portion cylindrique (230).

5. Mécanisme à double embrayage humide selon la revendication précédente dépendant de la revendication 2, dans lequel la première surface (235) de friction est formée sur la collerette (240).

6. Mécanisme à double embrayage humide selon l'une quelconque des revendications 2 à 5, dans lequel la première surface (235) de friction est définie par le diamètre D2 et un diamètre intérieur D3.

7. Mécanisme à double embrayage humide selon l'une quelconque des revendications précédentes, dans lequel la soudure par friction entre le moyeu (131, 231) et le support de disques (132, 232) est circonférentiellement continue.

8. Mécanisme à double embrayage humide selon l'une quelconque des revendications précédentes dépendant de la revendication 4, dans lequel le moyeu (131, 231) en tôle comprend au moins un raidisseur disposé entre la portion cylindrique (230) et la collerette (240).

9. Mécanisme à double embrayage humide selon l'une quelconque des revendications précédentes, dans lequel un premier bourrelet de soudage (238) est situé sur la périphérie interne du support de disques (132, 232) et un deuxième bourrelet de soudage (238) est situé sur la périphérie externe du moyeu (131, 231).

## Patentansprüche

1. Nasser Doppelkupplungsmechanismus, welcher eine erste Kupplung (E1) und eine zweite Kupplung (E2) umfasst, die jeweils vom Typ einer Lamellenkupplung sind und so gesteuert werden, dass sie selektiv eine Antriebswelle mit einer ersten Abtriebswelle und mit einer zweiten Abtriebswelle, zum Beispiel mit einer ersten und einer zweiten Getriebewelle, kuppeln, wobei die erste und die zweite Kupplung (E1, E2) jeweils einen Ausgangslamellenträger (13, 23) umfassen, wobei jeder der Lamellenträger umfasst:
- eine Nabe (131, 231) von zylindrischer Form mit einer Drehachse O,
- einen Lamellenhalter (132, 232), der rotationssymmetrisch um die Achse O ist, wobei der Lamellenhalter (132, 232) axial an der Nabe (131, 231) anliegt,
wobei die Nabe (131, 231) und der Lamellenhalter (132, 232) mittels Reibschweißung zusammengebaut sind, wobei der Lamellenhalter (132, 232) eine Bohrung (233) umfasst, deren Innenumfang einen ersten Durchmesser D1 entlang der Achse O definiert, und die Nabe (131, 231) einen Außenumfang umfasst, der einen zweiten Durchmesser D2 entlang der Achse O definiert, wobei der Durchmesser D1 kleiner als der Durchmesser D2 ist,
wobei der nasse Doppelkupplungsmechanismus **dadurch gekennzeichnet ist, dass** er außerdem ein Axiallager (90) umfasst, das axial zwischen dem Ausgangslamellenträger (13) der ersten Kupplung (E1) und dem Ausgangslamellenträger (23) der zweiten Kupplung (E2) angeordnet ist, wobei das Axiallager (90) radial wenigstens teilweise zwischen den Durchmessern D1 und D2 eines der Ausgangslamellenträger angeordnet ist.

2. Nasser Doppelkupplungsmechanismus nach dem vorhergehenden Anspruch, wobei die Nabe (131, 231) eine erste Reibfläche (235) umfasst und der Lamellenhalter (132, 232) eine zweite Reibfläche (236) umfasst, wobei die Reibschweißverbindung zwischen der ersten (235) und der zweiten (236) Reibfläche angeordnet ist.

3. Nasser Doppelkupplungsmechanismus nach dem vorhergehenden Anspruch, wobei die erste Reibfläche (235) parallel zur zweiten Reibfläche (236) ist.

4. Nasser Doppelkupplungsmechanismus nach einem der vorhergehenden Ansprüche, wobei die Nabe (131, 231) einen zylindrischen Abschnitt (230) und einen Kragen (240), der sich von dem zylindrischen Abschnitt (230) aus radial nach außen erstreckt, umfasst.

5. Nasser Doppelkupplungsmechanismus nach dem vorhergehenden Anspruch, wenn abhängig von Anspruch 2, wobei die erste Reibfläche (235) auf dem Kragen (240) ausgebildet ist.

6. Nasser Doppelkupplungsmechanismus nach einem der Ansprüche 2 bis 5, wobei die erste Reibfläche (235) durch den Durchmesser D2 und einen Innendurchmesser D3 definiert ist.

7. Nasser Doppelkupplungsmechanismus nach einem der vorhergehenden Ansprüche, wobei die Reibschweißverbindung zwischen der Nabe (131, 231) und dem Lamellenhalter (132, 232) in Umfangsrichtung durchgehend ist.

8. Nasser Doppelkupplungsmechanismus nach einem der vorhergehenden Ansprüche, wenn abhängig von Anspruch 4, wobei die Nabe (131, 231) aus Blech mindestens eine Versteifungsrippe umfasst, die zwischen dem zylindrischen Abschnitt (230) und dem Kragen (240) angeordnet ist.

9. Nasser Doppelkupplungsmechanismus nach einem der vorhergehenden Ansprüche, wobei eine erste Schweißraupe (238) sich auf dem Innenumfang des Lamellenhalters (132, 232) befindet und eine zweite Schweißraupe (238) sich auf dem Außenumfang der Nabe (131, 231) befindet.

## Claims

1. A dual wet clutch mechanism comprising a first clutch (E1) and a second clutch (E2), respectively, of the multi-disk type, controlled to selectively couple a driving shaft to a first driven shaft and to a second driven shaft, for example, a first and a second gearbox shaft, said first and second clutches (E1, E2) comprise, each of them, aa output disk holder (13, 23),
each of disk holder comprising:
- a cylindrical hub (131, 231) with an axis of rotation O;
- a disk support (132, 232) of rotationally symmetrical shape about the axis O, the disk support (132, 232) axially bearing on the hub (131, 231),
the hub (131, 231) and the disk support (132, 232) being assembled by means of friction welding,
wherein the disk support (132, 232) comprises a bore (233), the internal periphery of which defines a first diameter D1 along the axis O, and the hub (131, 231) comprises an external periphery defining a second diameter D2 along the axis O, the diameter D1 being less than the diameter D2,
the wet clutch mechanism being **characterized in that** it comprises also an axial bearing (90) axially interposed between the output disk holder (13) of the first clutch (E1) and the output disk holder (23) of the second clutch (E2), the axial bearing (90) being radially disposed at least partly between the diameters D1 and D2 of one of the output disk holders.

2. The dual wet clutch mechanism as claimed in the preceding claim, wherein the hub (131, 231) comprises a first friction surface (235) and the disk support (132, 232) comprises a second friction surface (236), the friction weld being located between the first (235) and the second (236) friction surfaces.

3. The dual wet clutch mechanism as claimed in the preceding claim, wherein the first friction surface (235) is parallel to the second friction surface (236).

4. The dual wet clutch mechanism as claimed in any one of the preceding claims, wherein the hub (131, 231) comprises a cylindrical portion (230) and a collar (240) radially extending outward from the cylindrical portion (230).

5. The dual wet clutch mechanism as claimed in the preceding claim as dependent on claim 2, wherein the first friction surface (235) is formed on the collar (240).

6. The dual wet clutch mechanism as claimed in any one of claims 2 to 5, wherein the first friction surface (235) is defined by the diameter D2 and by an inner diameter D3.

7. The dual wet clutch mechanism as claimed in any one of the preceding claims, wherein the friction weld between the hub (131, 231) and the disk support (132, 232) is circumferentially continuous.

8. The dual wet clutch mechanism as claimed in any one of the preceding claims as dependent on claim 4, wherein the sheet-metal hub (131, 231) comprises at least one stiffener disposed between the cylindrical portion (230) and the collar (240).

9. The dual wet clutch mechanism as claimed in any one of the preceding claims, wherein a first weld bead (238) is located on the internal periphery of the disk support (132, 232) and a second weld bead (238) is located on the external periphery of the hub (131, 231).
